# EUROPÄISCHE PATENTSCHRIFT

(11) **EP 3 693 712 B1**
(45) Veröffentlichungstag und Bekanntmachung des Hinweises auf die Patenterteilung: **10.03.2021**
(21) Anmeldenummer: 20151475.9
(22) Anmeldetag: 13.01.2020
(51) Int. Cl.: G01F 23/284, G01S 13/88

(54) **SENSOR ZUM BESTIMMEN EINER PROZESSGRÖSSE**
SENSOR FOR DETERMINING A PROCESS VARIABLE
CAPTEUR PERMETTANT DE DÉTERMINER UNE GRANDEUR DE PROCESSUS

(30) Priorität: 05.02.2019 DE 102019102812
(43) Veröffentlichungstag der Anmeldung: 12.08.2020
(73) Patentinhaber: SICK AG, 79183 Waldkirch (DE)
(72) Erfinder: Bürklin, Sebastian, 79110 Freiburg (DE); Scholder, Jochen, 79183 Waldkirch (DE); Bleiziffer, Markus, 79110 Freiburg (DE); Albrecht, Jens, 79199 Kirchzarten (DE); Graner, Thomas, 79211 Denzlingen (DE)

(56) Entgegenhaltungen:
- EP-A1- 2 527 803
- EP-A2- 0 928 955
- WO-A1-02/23139
- WO-A1-2010/105654
- US-A- 6 148 681
- US-A1- 2015 276 460

## Beschreibung

Die Erfindung betrifft einen Sensor zum Bestimmen einer Prozessgröße in einem Behälter nach dem Oberbegriff von Anspruch 1.

Zur Bestimmung von Prozessgrößen eines Mediums in einem Behälter sind diverse Sensoren bekannt, die beispielsweise den Füllstand oder die Temperatur messen. Obwohl es auch berührungslose Messverfahren gibt, nutzen viele Sensoren eine Sonde, die in das zu vermessende Medium eintaucht. So misst die beispielsweise aus DE 10 2007 030 847 A1 bekannte Füllstandmessung mit Zeitbereichsreflektometrie (TDR, Time Domain Reflectometry) die Laufzeit von in der Sonde geführten Mikrowellenpulsen bis zur Oberfläche des Mediums. Ein anderes bekanntes Prinzip zur Füllstandmessung basiert auf Kapazitätsmessung zwischen der Sonde und einer Referenz. Diese Kapazität wird durch die dielektrischen Eigenschaften des Mediums je nach Füllstand verändert. Unter Berücksichtigung der Dielektrizitätskonstante des Mediums wird aus der gemessenen Kapazität der Füllstand berechnet. Als Referenz dienen ein metallischer Behälter, eine eingebrachte Metallfläche oder eine zweite Sonde, die üblicherweise auf Masse liegen. Es ist auch bekannt, Kapazitäten zwischen mehreren Elektroden auf einer entsprechend in Elektroden segmentierten Sonde zu bestimmen, wie dies beispielsweise in der EP 2 657 663 A1 beschrieben ist.

Im Übergang zur eintauchenden Sonde sind einige konstruktive Herausforderungen zu lösen. Ein abgedichteter Übergang verhindert, dass Medium in den eigentlichen Sensor eindringt. Ein sprungfreies Design vermindert Ablagerungen, die sich auf die Messung auswirken könnten. Speziell beim Einsatz im Hygienebereich muss eine glatte Oberfläche vorgesehen sein, um eine Reinigung zu ermöglichen, und der Übergang muss auch während der Reinigung dicht bleiben. Schließlich ist die Sonde mechanischen Belastungen ausgesetzt, etwa durch ein Rührwerk im Behälter, und dadurch darf die Dichtigkeit nicht beeinträchtigt werden und die Sonde nicht beschädigt werden.

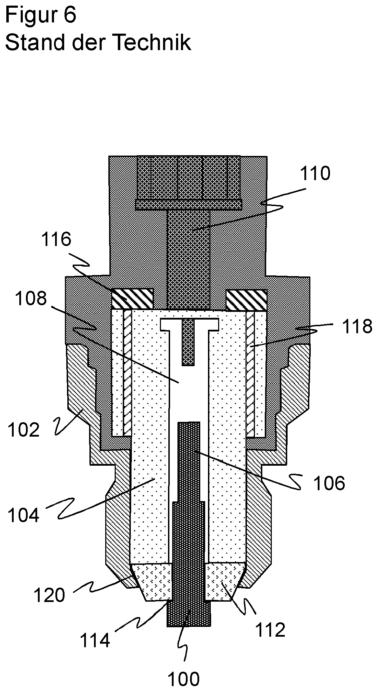

Figur 6 zeigt einen Sondenübergang von der Sonde 100 auf ein auch als Prozessanschluss bezeichnetes metallisches Gehäuse 102 nach dem Stand der Technik. In dem Gehäuse 102 befindet sich ein Innengehäuse 104 oder Druckstück. Die Sonde 100 wird an ihrer Spitze 106 in eine Hülse 108 im Inneren des Gehäuses 102 verschraubt. Im oberen Bereich befindet sich ein weiteres Übergangsstück 110 zum nicht gezeigten Sensorkopf mit Auswertungselektronik und Schnittstellen.

Das Verbindungsstück zwischen Sonde 100 und Gehäuse 102 ist ein Konus 112 aus PEEK. Es gibt zwei Dichtstellen, nämlich von der Sonde 100 zu dem Konus 112 und von dem Konus 112 zu dem Gehäuse 102. Dafür werden zwei voneinander unabhängige Dichtprinzipien verwendet.

Der Übergang von Sonde 100 zu dem Konus 112 wird über eine Schneidkante 114 an der Sonde 100 abgedichtet. Beim Einschrauben der Sonde 100 in die Hülse 108 dringt die Schneidkante 114 in den Konus 112 ein.

Der Übergang von Konus 112 auf das Gehäuse 102 wird mit Hilfe von Tellerfedern 116 abgedichtet. Die Tellerfedern 116 werden durch das Verschrauben von dem Übergangsstück 112 und dem Gehäuse 102 vorgespannt. Sie drücken über Abstandshalter 118 und das Innengehäuse 104 den Konus 112 gegen nach innen geneigte Abschrägungen 120 des Gehäuses 102. Konus 112 und Abschrägung 120 haben unterschiedliche Öffnungswinkel, der Konus 112 ist etwas steiler, wobei der geringfügige Unterschied in Figur 6 kaum zu erkennen ist. Das erzeugt eine Linienberührung, und durch die Federkraft der Tellerfedern 116 wird der Bereich abgedichtet.

Der herkömmliche Sondenübergang hat mehrere Nachteile. Auf Höhe der Schneidkante 114 verringert sich der Durchmesser der Sonde 100 deutlich. Die Kerbe an der Verjüngungsstelle der Sonde 100 bildet eine Schwachstelle, die bei dynamischen Anwendungen mit stärkerer Bewegung des Mediums und daher auch der Sonde 100 zum Dauerbruch führt. Außerdem wirkt prozessseitiger Druck gegen die Federkraft der Tellerfedern 116 und mindert so die Dichtwirkung im Übergang von Konus 112 auf das Gehäuse 102.

Im Stand der Technik finden sich verschiedene Dokumente, die sich mit der Sonde und deren Anschluss an den Sensor befassen. Die DE 10 2004 060 119 A1 offenbart ein Füllstandsmessgerät mit einem Gehäuse und einer Sonde, wobei für eine hygienische Abdichtung die Verbindung zwischen Sonde und Gehäuse im Innenraum des Gehäuses angeordnet wird. Eine Prozessdichtung dichtet den Innenraum gegen den Prozess hin ab, die als zwei O-Ringe oder als frontbündige Formdichtung ausgebildet ist. Eine Konusdichtung wird auch diskutiert, aber als nachteilig verworfen.

Die EP 1 544 585 B1 offenbart eine Durchführungsbaugruppe für einen Füllstandsensor mit einem Prozessanschluss und einem Innenleiter, wobei die sich berührenden Flächen formschlüssig dichtend ausgebildet sind. Sofern es überhaupt möglich ist, auf diesem Weg eine robuste hygienische Abdichtung zu schaffen, so erfordert dies jedenfalls eine ausgesprochen aufwändige und präzise Metallbearbeitung.

In der EP 2 093 846 B1 wird eine Leiterdurchführung für ein Feldgerät zum Verbinden von zwei elektrischen Leitern beschrieben. Ein hohler Innenbereich wird durch eine Vergusseinrichtung abgedichtet.

Aus WO 2010/105654 A1, EP 2 527 803 A1, US 6 148 681 A, US 2015/276460 A1 und EP 0 928 955 A2 sind jeweils Sondenübergänge eines Füllstandsensors bekannt, die ein kegelförmiges Element aufweisen. Die WO 02/23139 A1 verwendet als Dichtung einen Ring mit doppelt konischem Querschnitt.

Es ist daher Aufgabe der Erfindung, ein verbessertes Dichtkonzept für den Sondenübergang anzugeben.

Diese Aufgabe wird durch einen Sensor zum Bestimmen einer Prozessgröße in einem Behälter nach Anspruch 1 gelöst. Die Sonde des Sensors ragt im Betrieb in den Behälter hinein und taucht in ein darin befindliches Medium ein. Eine Steuer- und Auswerteeinheit, die mit Hilfe der Sonde die Prozessgröße bestimmt, ist vorzugsweise in einem Sensorkopf untergebracht, an dem die Sonde befestigt ist und der sich außerhalb des Mediums, oft außerhalb des Behälters befindet. Es gibt aber auch Bauformen mit abgesetzter Sonde, wo die Steuer- und Auswertungseinheit nicht fest mit der Sonde verbunden und in einigem Abstand zum Behälter angeordnet ist. Ein Gehäuse weist einen Verbindungsbereich auf, in dem die Sonde mit ihrem oberen Ende gehalten wird, wobei sich die Sonde vorzugsweise ein Stück in das Gehäuse hinein erstreckt. Im Verbindungsbereich sind schräge Auflageflächen für ein dort angeordnetes Kegelelement vorgesehen, wobei das Kegelelement als Dichtelement des Sondenübergangs fungiert.

Die Erfindung geht von dem Grundgedanken aus, das Kegelelement mit seiner Grundfläche nach unten zu orientieren. Der Kegel verjüngt sich demnach nach oben hin, in das

Gehäuse hinein. Die Begriffe oben und unten sind relativ und nicht einschränkend zu verstehen, sie sind von der typischen Einbausituation eines am Behälterdeckel mit nach unten in den Behälter hineinragender Sonde getragen. Das obere Ende der Sonde ist daher dasjenige, das den Sondenübergang bildet, das untere Ende deren ferne Spitze, die in der üblichen Einbausituation in der Nähe des Behälterbodens liegt.

Gegenüber der einleitend zu Figur 6 vorgestellten herkömmlichen Lösung wird also der Kegel auf den Kopf gestellt. Dementsprechend sind auch die schrägen Auflageflächen des Gehäuses umgekehrt orientiert, nämlich parallel oder annähernd parallel zu der Mantelfläche des Kegelelements. Der Kontakt zwischen Auflagefläche und Mantelfläche bildet eine erste Dichtstelle.

Die Erfindung hat den Vorteil, dass Dichtigkeit und Stabilität verbessert sind und dafür so gut wie kein zusätzlicher Aufwand erforderlich ist. Die Sonde weist durch geringere Kerbwirkung und geringere Querschnittsschwächung eine wesentlich größere Wechselbiegefestigkeit auf. Wegen des umgekehrten Kegelelements schwächt prozessseitiger Überdruck nicht länger die Abdichtung, sondern wirkt im Gegenteil sogar dichtungsverstärkend. Der Sondenübergang ist nicht nur gasdicht, sondern kann auch entsprechend der EHEDG-Richtlinien hygienisch ausgeführt werden.

Das Kegelelement ist vorzugsweise als Kegelstumpf ausgebildet. Die Grundfläche ist dann diejenige mit dem größten Durchmesser, das Kegelelement ist daher mit der abgeschnittenen Kegelspitze nach oben orientiert.

Das Kegelelement weist bevorzugt eine zentrale Öffnung auf, durch welche die Sonde längs der Kegelmittenachse hindurchläuft. Die Sonde bildet gleichsam die Mittenachse des Kegelelements, das ringförmig um die Sonde angeordnet ist.

Das Kegelelement ist bevorzugt als Doppelkegel ausgebildet. Es weist dazu nach unten hin eine zusätzliche umlaufende Abschrägung auf. Die dadurch gebildete zweite Mantelfläche dient als Dichtfläche für einen hygienischen Anschluss. Die zweite Mantelfläche ist aber deutlich kleiner als die erste Mantelfläche, die zu dem Gehäuse hin abdichtet, und hat auch vorzugsweise einen steileren Kegelwinkel. Daher bleibt die nach unten weisende Grundfläche weitgehend gegenüber Ausführungsformen ohne Doppelkegel unverändert.

Das Kegelelement ist vorzugsweise aus Kunststoff hergestellt. Besonders geeignet ist PEEK (Polyetheretherketon). Das Gehäuse ist vorzugsweise aus Metall hergestellt, um genügend Robustheit aufzuweisen. Das gilt meist auch für die Sonde. Allerdings sind nicht für alle Messungen rein metallische Sonden geeignet, so dass hier auch andere Werkstoffe und komplexere Strukturen denkbar sind.

Erfindungsgemäß ist ein die Sonde umgebender Ring als Auflage für die Grundfläche des Kegelelements an die Sonde angeschweißt. Zwischen diesem Ring und dem Kegelelement wird dann eine zweite Dichtstelle gebildet. Die Sonde samt angeschweißtem Ring kann mit geringem Aufwand hergestellt werden. Um eine abgerundete Schweißnaht zu erhalten, ist bevorzugt umlaufend an den Übergängen vom dem Ring auf die Sonde ein vorzugsweise beidseitiger Materialzuschlag vorgesehen.

Der Ring weist eine umlaufende Schneidkante zum Eindringen in das Kegelelement auf. Damit entsteht eine verlässliche zweite Dichtstelle, wenn Ring und Kegelelement gegeneinandergedrückt werden, beispielsweise über eine Federkraft.

Die Sonde weist bevorzugt auf Höhe des Kegelelements einen Verjüngungsbereich auf, wobei der Durchmesser der Sonde oberhalb des Verjüngungsbereichs kleiner ist als der Durchmesser unterhalb. Das dient als Anschlag für den anzuschweißenden Ring. Außerdem werden Zugkräfte auf die Schweißnaht gemindert, es bildet sich nahezu kein Schweißspalt. Im Gegensatz zum Stand der Technik gemäß Figur 6 genügt hier eine minimale Verkleinerung des Durchmessers, so dass die Wechselbiegefestigkeit nicht beeinträchtigt wird.

Der Sensor weist mindestens eine Feder auf, um die schräge Auflagefläche des Verbindungsbereichs und das Kegelelement gegeneinander zu drücken. Das stärkt beide Dichtstellen, denn es hält nicht nur Gehäuse und Kegelelement zusammen, sondern drückt auch das Kegelelement in die Schneidkante des Rings. Als Feder dient bevorzugt mindestens eine Tellerfeder um den oberen Bereich der Sonde, der sich ins Gehäuse hinein erstreckt.

Der Sensor ist bevorzugt als Füllstandsensor zur Bestimmung des Füllstands des Mediums in dem Behälter ausgebildet. Ein bevorzugtes Messprinzip ist TDR (Time Domain Reflectometry). Alternativ handelt es sich um einen kapazitiven Füllstandsensor.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittansicht eines Füllstandsensors in einem Behälter;
- Fig. 2: eine Prinzipdarstellung der erfindungsgemäßen Verbindung von Sonde und Gehäuse;
- Fig. 3: eine Übersichtsdarstellung des allgemeinen Aufbaus von Sonde und Gehäuse;
- Fig. 4: eine Ausschnittdarstellung eines an die Sonde angeschweißten Rings;
- Fig. 5: eine Ausschnittdarstellung eines Kegelelements zur Auflage auf den Ring gemäß Figur 4; und
- Fig. 6: eine schematische Darstellung einer Verbindung von Sonde und Gehäuse nach dem Stand der Technik.

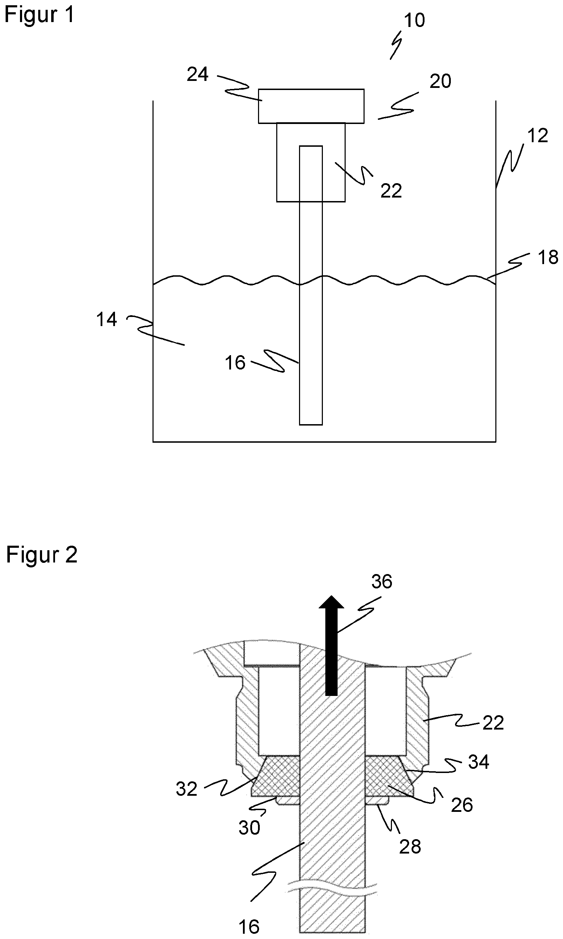

Figur 1 zeigt schematisch in einer Seitenansicht einen Füllstandsensor 10, der in einem Tank oder Behälter 12 mit einem Medium 14 angebracht ist. Eine Sonde 16 ragt in das Medium 14 hinein, vorzugsweise bis zum Boden des Behälters 12. Das Medium 14 bildet eine Grenzfläche 18, und der Füllstandsensor 10 ist dafür ausgebildet, die Entfernung der Grenzfläche 18 zu ermitteln und somit den Füllstand des Mediums 14 abzuleiten. Die Erfindung wird am Beispiel des Füllstandsensors 10 erklärt, umfasst jedoch auch andere Sensoren, die eine Sonde 16 aufweisen, die in ein Medium 14 eintaucht.

Die Sonde 16 wird mit ihrem oberen Ende von einem Sensorkopf 20 gehalten. Der Sondenübergang zu einem Gehäuse 22 oder Prozessanschluss wird nachfolgend unter Bezugnahme auf die Figuren 2 bis 5 näher erläutert. In dem Sensorkopf 20 ist die Elektronik untergebracht, insbesondere eine Steuer- und Auswertungseinheit 24, die das Messverfahren steuert und die Messwerte gewinnt und die Schnittstellen zum Anbinden des Füllstandsensors 10 in eine Anlage aufweist. Alternativ zu der dargestellten Ausführungsform kann die Steuer- und Auswertungseinheit 24 nicht fest mit der Sonde 16 verbunden sein. Am Behälter 12 ist dann nur der Prozessanschluss mit der in den Behälter 12 ragenden Sonde 16 angebracht. Ein Elektronikgehäuse mit der Steuer- und Auswertungseinheit 24 ist dann abgesetzt und durch eine Leitung mit Prozessanschluss und Sonde 16 verbunden.

Bei einem bevorzugten TDR-Messverfahren sendet die Steuer- und Auswertungseinheit 24 einen kurzen elektromagnetischen Puls, vorzugsweise einen Mikrowellenpuls, durch die Sonde 16. An der Grenzfläche 18 springt die relative Dielektrizitätskonstante und damit der Wellenleitwiderstand und erzeugt so einen Reflexpuls. Mit dem Reflexpuls bestimmt die Steuer- und Auswertungseinheit 24 die Laufzeit zu der Grenzfläche 18 und über die Signalausbreitungsgeschwindigkeit deren Entfernung.

Figur 2 zeigt eine Prinzipdarstellung des Sondenübergangs. Die Sonde 16 ist im Falle eines TDR-Verfahrens metallisch, und auch das Gehäuse 22 ist vorzugsweise ein Metallgehäuse. Eine leitende Verbindung darf es dazwischen nicht geben.

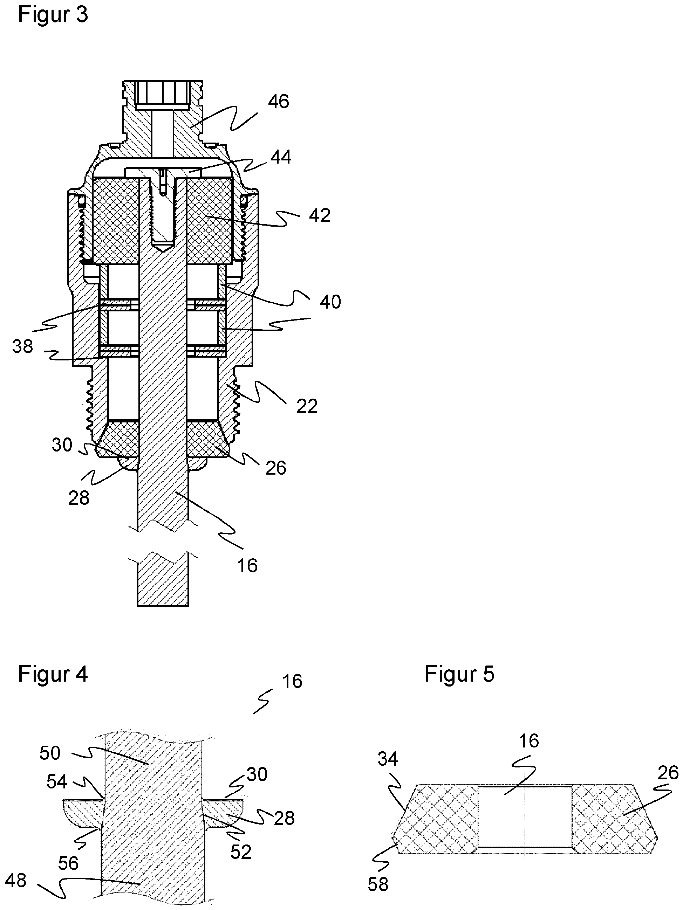

Die Grundidee ist, die Verbindung über ein Kegelelement 26 zu realisieren, das im Gegensatz zu der herkömmlichen Lösung nach Figur 6 mit seiner Grundfläche nach unten beziehungsweise mit seiner Spitze nach oben angeordnet ist. Das herkömmliche Dichtprinzip wird um 180° gedreht. An die Sonde 16 wird ein Ring 28 mit einer Schneidkante 30 geschweißt. Die herkömmliche Querschnittsschwächung der Sonde 16 nach oben hin entfällt, da das Kegelelement 26 sich auf dem Ring 28 und nicht einer Verjüngung abstützt. Eine geringfügige Verjüngung, welche die Wechselbiegefestigkeit nicht beeinträchtigt, bleibt aber denkbar und wird später zu Figur 4 erläutert.

Es entsteht eine erste Dichtstelle zwischen Kegelelement 26 und Gehäuse 22 dort, wo eine schräge Auflagefläche 32 des Gehäuses 22 auf einer Mantelfläche 34 des Kegelelements 26 aufliegt. Die Öffnungswinkel können leicht unterschiedlich sein, um eine Linienberührung zu bewirken. Eine zweite Dichtstelle befindet sich zwischen Kegelelement 26 und Sonde 16 an der Auflage des Kegelelements 26 auf dem Ring 28.

Auf die Sonde 16 soll eine Zugkraft 36 einwirken und diese selbe Zugkraft 36 beide Dichtstellen abdichten. Die erste Dichtstelle wird durch die Auflage und insbesondere die leicht unterschiedlichen Öffnungswinkel, die zweite Dichtstelle durch das Eindringen der Schneidkante 30 an der Unterseite des Kegelelements 26 abgedichtet.

Figur 3 zeigt eine Übersichtsdarstellung einer Ausführungsform des erfindungsgemäßen Sondenübergangs. Dabei bezeichnen hier und nachfolgend gleiche Bezugszeichen die gleichen Merkmale. Der Bereich um das Kegelelement 26 mit den beiden Dichtstellen wurde bereits zu Figur 2 erläutert.

In das Gehäuse 22 werden Federelemente 38 eingelegt, vorzugsweise Tellerfedern mit Abstandshaltern 40 dazwischen wie dargestellt, oder alternativ andere Federn wie Druckfedern. Bei der Herstellung wird der Ring 28 mit Schneidkante 30 an die Sonde 16 geschweißt. Das Kegelelement 26 wird von oben auf die Sonde 16 aufgeschoben, und die Sonde 16 wird samt Kegelelement 26 von unten in das Gehäuse 22 gesteckt. Von oben her wird ein weiterer Abstandshalter 42 vorzugsweise ebenfalls aus PEEK aufgeschoben. Durch eine Befestigungsschraube 44 werden die Federelemente 38 gespannt und die Dichtstellen geschlossen. Zuletzt wird ein Übergangsstück 46 zum Sensorkopf 20 aufgeschraubt.

Figur 4 zeigt eine Ausschnittdarstellung des Bereichs der Sonde 16 mit dem angeschweißten Ring 28. Vorzugsweise sind Sonde 16 und Ring 28 aus Edelstahl. Die Sonde 16 hat unterhalb des Rings 28 vorzugsweise einen etwas größeren Durchmesser 48 und dementsprechend oberhalb des Rings 28 einen geringfügig reduzierten Durchmesser 50. Dazwischen befindet sich ein konischer Übergang 52.

Die Querschnittsreduktion schwächt die Sonde 16 nur minimal und verringert deren Wechselbiegefestigkeit auch nur gering. Der konische Übergang zum kleineren Durchmesser ist mit einem möglichst großen Übergangsradius zu versehen. Der konische Übergang 52 hat keine Auflagefunktion, sondern dient als Anschlag für den anzuschweißenden Ring 28 und mindert gleichzeitig die später auftretenden Zugkräfte auf die Schweißnähte. Außerdem ist durch die konische Auflage nahezu kein Schweißspalt vorhanden, was Qualität und Festigkeit der Schweißnaht verbessert. Es wird vorzugsweise ein Laserschweißverfahren ohne Schweißzusatzwerkstoff verwendet. Die Schweißnähte werden beidseitig dicht ausgeführt. Damit eine abgerundete Schweißnaht entsteht, erhält der Ring 28 vorzugsweise zusätzlich beidseitig einen Materialzuschlag 54, 56.

Figur 5 zeigt eine Detailansicht des Kegelelements 26. Das Kegelelement 26 kann als einfacher Kegel oder Kegelstumpf ausgebildet sein. Dargestellt ist eine Ausführungsform als Doppelkegel. Zusätzlich zu der Mantelfläche 34, auf dem das Gehäuse 22 aufliegt, ist demnach eine zweite, gegensätzlich geneigte Mantelfläche 58 vorgesehen. Diese zweite Mantelfläche 58 ist aber vorzugsweise steiler und hat eine geringere Höhenerstreckung, so dass die Geometrie des Kegelelements 26 weiterhin eher einen einfachen Kegel oder Kegelstumpf bildet. Die zweite Mantelfläche 58 kann als Dichtfläche für hygienische Anschlüsse verwendet werden, beispielsweise TriClamp. Das Anzugs-Drehmonent des Gehäuses wirkt analog einem prozessseitigen Druck dichtungsverstärkend.

## Patentansprüche

1. Sensor (10) zum Bestimmen einer Prozessgröße in einem Behälter (12), der eine langgestreckte Sonde (16) zum Eintauchen in ein Medium (14) in dem Behälter (12), eine Steuer- und Auswerteeinheit (24) zum Messen der Prozessgröße mittels der Sonde (16) und ein Gehäuse (22) mit einem Verbindungsbereich zum Verbinden eines oberen Endes der Sonde (16) mit dem Gehäuse (22) aufweist, wobei der Verbindungsbereich mit einer schrägen Auflagefläche (32) auf einem in dem Verbindungsbereich angeordneten Kegelelement (26) aufliegt, wobei das Kegelelement (26) mit seiner Grundfläche nach unten Richtung unteres Ende der Sonde (16) angeordnet ist und wobei die Sonde (16) auf Höhe des Kegelelements (26) keine oder nur eine geringfügige Querschnittsreduktion aufweist, welche die Wechselbiegefestigkeit nicht beeinträchtigt,
**dadurch gekennzeichnet,**
**dass** ein die Sonde (16) umgebender Ring (28) als Auflage für die Grundfläche des Kegelelements (26) an die Sonde (16) angeschweißt ist, wobei der Ring (28) eine umlaufende Schneidkante (30) zum Eindringen in das Kegelelement (26) aufweist.

2. Sensor (10) nach Anspruch 1,
wobei das Kegelelement (26) als Kegelstumpf ausgebildet ist.

3. Sensor (10) nach Anspruch 2,
wobei das Kegelelement (26) eine zentrale Öffnung aufweist, durch welche die Sonde (16) längs der Kegelmittenachse hindurchläuft.

4. Sensor (10) nach einem der vorhergehenden Ansprüche,
wobei das Kegelelement (26) als Doppelkegel ausgebildet ist, d.h. nach unten hin eine zusätzliche Abschrägung aufweist.

5. Sensor (10) nach einem der vorhergehenden Ansprüche,
wobei das Kegelelement (26) aus Kunststoff, insbesondere PEEK, und Sonde (16) und Gehäuse (22) aus Metall hergestellt sind.

6. Sensor (10) nach einem der vorhergehenden Ansprüche,
mit mindestens einer Feder (38), um die schräge Auflagefläche (32) des Verbindungsbereichs und das Kegelelement (26) gegeneinander zu drücken.

7. Sensor (10) nach einem der vorhergehenden Ansprüche,
der als Füllstandsensor zur Bestimmung des Füllstands des Mediums (14) in dem Behälter (12) ausgebildet ist.

## Claims

1. A sensor (10) for determining a process variable in a container (12), the sensor (10) comprising an elongated probe (16) for immersion into a medium (14) in the container (12), a control and evaluation unit (24) for measuring the process variable by means of the probe (16), and a housing (22) having a connecting region for connecting an upper end of the probe (16) to the housing (22), the connecting region resting with an inclined bearing surface (32) on a cone element (26) arranged in the connecting region, wherein the cone element (26) is arranged with its base surface facing downwards in the direction of the lower end of the probe (16), and wherein the probe (16) has no or only a slight reduction in cross-section at the level of the cone element (26) which does not impair the flexural fatigue strength,
**characterized in that** a ring (28) surrounding the probe (16) is welded to the probe (16) as a support for the base surface of the cone element (26), the ring (28) comprising a circumferential cutting edge (30) for penetration into the cone element (26).

2. The sensor (10) according to claim 1,
wherein the cone element (26) is formed as a truncated cone.

3. The sensor (10) according to claim 2,
wherein the cone element (26) comprises a central opening through which the probe (16) passes along the central axis of the cone.

4. The sensor (10) according to one of the preceding claims,
wherein the cone element (26) is configured as a double cone, i.e. has an additional bevel towards the bottom.

5. The sensor (10) according to one of the preceding claims,
wherein the cone element (26) is made of plastic, in particular PEEK, and the probe (16) and housing (22) are made of metal.

6. The sensor (10) according to one of the preceding claims,
comprising at least one spring (38) for pressing the inclined bearing surface (32) of the connecting portion and the cone element (26) against each other.

7. The sensor (10) according to one of the preceding claims,
which is configured as a level sensor for determining the level of the medium (14) in the container (12).

## Revendications

1. Capteur (10) pour déterminer une grandeur de processus dans un récipient (12), le capteur (10) comprenant une sonde allongée (16) destinée à être plongée dans un milieu matériel (14) dans le récipient (12), une unité de commande et d'évaluation (24) pour mesurer la grandeur de processus au moyen de la sonde (16), et un boitier (22) avec une zone de liaison pour relier une extrémité supérieure de la sonde (16) au boitier (22), la zone de liaison reposant avec une surface d'appui inclinée (32) sur un élément conique (26) disposé dans la zone de liaison, dans lequel l'élément conique (26) est disposé avec sa surface de base tournée vers le bas en direction de l'extrémité inférieure de la sonde (16), et dans lequel la sonde (16) ne présente pas ou seulement une légère réduction de la section transversale au niveau de l'élément conique (26) qui ne nuit pas à la résistance à la flexion alternée,
**caractérisé en ce qu'**un anneau (28) entourant la sonde (16) est soudé à la sonde (16) comme support de la surface de base de l'élément conique (26), l'anneau (28) comprenant un bord de coupe circonférentiel (30) pour la pénétration dans l'élément conique (26).

2. Capteur (10) selon la revendication 1,
dans lequel l'élément conique (26) est formé comme un cône tronqué.

3. Capteur (10) selon la revendication 2,
dans lequel l'élément conique (26) comprend une ouverture centrale à travers laquelle la sonde (16) passe le long de l'axe central du cône.

4. Capteur (10) selon l'une des revendications précédentes,
dans lequel l'élément conique (26) est configuré comme un double cône, c'est-à-dire qu'il a un biseau supplémentaire vers le bas.

5. Capteur (10) selon l'une des revendications précédentes,
dans lequel l'élément conique (26) est en plastique, en particulier en PEEK, et la sonde (16) et le boîtier (22) sont en métal.

6. Capteur (10) selon l'une des revendications précédentes,
comprenant au moins un ressort (38) pour presser la surface d'appui inclinée (32) de la partie de raccordement et l'élément conique (26) l'un contre l'autre.

7. Capteur (10) selon l'une des revendications précédentes,
qui est configuré comme un capteur de niveau pour déterminer le niveau du milieu matériel (14) dans le récipient (12).
